# EUROPEAN PATENT APPLICATION

(11) **EP 1 744 548 A1**
(43) Date of publication of application: **17.01.2007**
(21) Application number: 05727562.0
(22) Date of filing: 01.04.2005
(51) Int. Cl.: H04N 5/335, H04N 9/07

(54) **IMAGING DEVICE, METHOD, AND PROGRAM**

(30) Priority: 06.05.2004 JP 2004137274
(71) Applicant: SONY CORPORATION, Tokyo 141-0001 (JP)
(72) Inventor: KOSUGA, Katsuya, SONY CORPORATION, Tokyo 141-0001 (JP); SANPEI, Kenichi, SONY CORPORATION, Tokyo 141-0001 (JP)
(74) Representative: Mills, Julia
(86) International application number: PCT/JP2005/006480
(87) International publication number: WO 2005/109862

(57) **Abstract**

A thinned-out image of an image can be displayed rapidly. An electronic camera, when a shutter is operated (released), starts imaging, and records the resultant image on a recording medium. At this time, the electronic camera displays an image (thinned-out display image) expressing an imaging state on a display unit. By referring to the thinned-out display image, a user can check the imaging state. The image resulting from photoelectric conversion by a CCD is read out in a plurality of read-outs (in this case, twice). More specifically, portions necessary for composing the thinned-out display image (Fig. 6 A) are first read out. Namely, according to the present invention, since the portions necessary for composing the thinned-out display image are first read out, the thinned-out display image can be generated before all the image of one frame (Fig. 6 C) is read out.

## Description

### Technical Field

The present invention relates to an imaging apparatus and method, and program, and to an imaging apparatus and method, and program capable of rapidly performing imaging processing.

### Background Art

As a method for downsizing an electronic camera such as a digital still camera and a digital video camera, there is a method of reading out an image of one frame acquired by photoelectric conversion in a plurality of read-outs, thereby reducing the number of vertical registers of a Charged Coupled Device (CCD) (increasing area efficiency of the CCD) (refer to Patent Document 1).

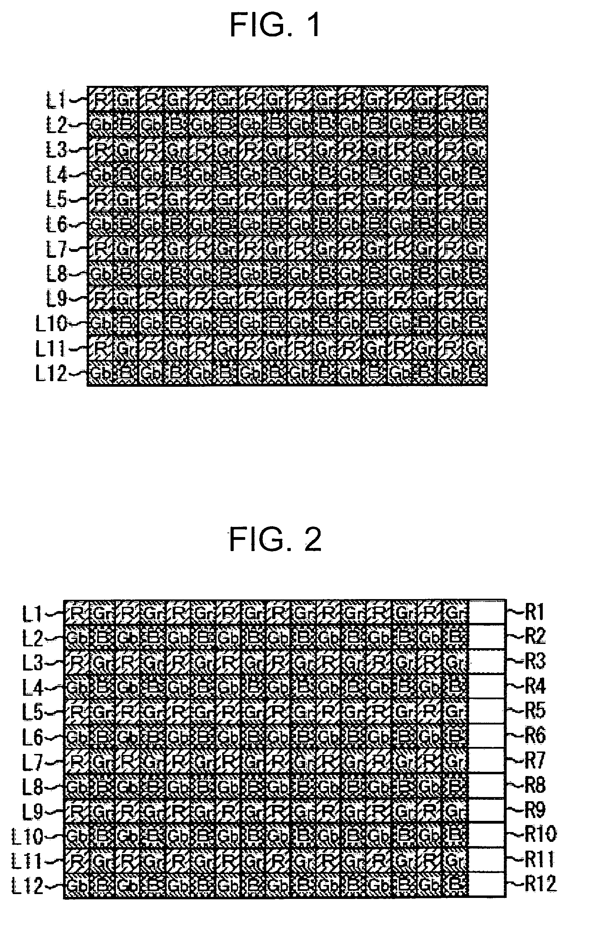

For example, in the case where an image of one frame is read out at once from a CCD having a structure of an imaging element as shown in Fig. 1, the CCD needs to be provided with a vertical register R in each row (line) as shown in Fig. 2. Thus, providing the vertical register R in each line allows pixels in each line to be simultaneously read out via the corresponding vertical register R. While the CCD of Fig. 1 is constituted to have 12 lines (rows) in an imaging element for explanation, for example, a CCD of 5M is composed of 2600 lines.

On the other hand, the imaging element of the CCD shown in Fig. 1 is evenly divided (into odd-numbered lines and even-numbered lines), and as shown in Fig. 3A, the odd-numbered lines L1, L3, .... are first thinned-out to be read out, and then, as shown in Fig. 3B, the remaining even-numbered lines L2, L4,... are read out, by which the image of one frame (Fig. 3B) is read out. Namely, since the division of reading-out into twice allows one vertical register R to be shared by two lines vertically adjacent to each other as shown in Fig. 4, the number of the vertical registers R can be reduced to one half.

[Patent Document 1]
Refer to Japanese Patent Application Publication No. 2003-102026.

### Disclosure of the Invention

As a series of image processing when an image resulting from imaging is recorded, an electronic camera performs processing of displaying a thinned-out image (hereinafter, referred to a thinned-out display image) of the image, applying signal processing in accordance with a detection result of the thinned-out display image, and so on. The display of the thinned-out display image allows a user to check an image when releasing a shutter. Moreover, the application of the signal processing in accordance with the detection result of the thinned-out display image allows for appropriate recording of the image.

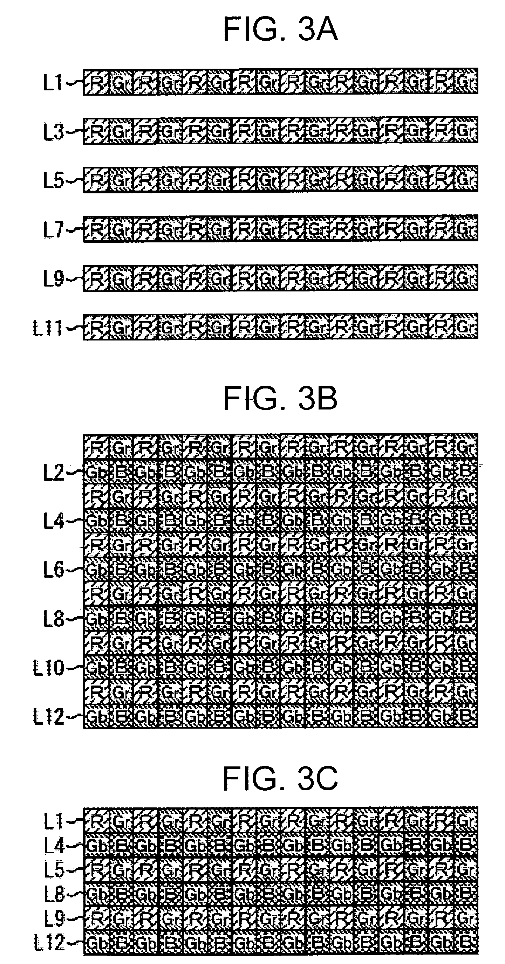

Since the reading-out of the image is performed separately, for example, for the odd-numbered lines and the even-numbered lines regardless of color or RGB signal (for example, in some cases, R and G are first read out and then, G and B are read out), the above-described processing needs to be performed after all the image (image of one frame) is read out. More specifically, after the image of one frame shown in Fig. 3B is read out, predetermined lines are thinned out from the image and read out to generate a thinned-out display image as shown in Fig. 3C. The thinned-out display image is detected and in accordance with resultant color and brightness information, the image (Fig. 3B) is processed.

While the thinned-out display image of Fig. 3C is composed of 6 lines for explanation, normally it is composed of 240 lines, for example.

Although the division of reading-out of the image into a plural times, as described above, can reduce the number of the vertical registers R and increase the area efficiency of the CCD, there arises a problem that reading-out of the image takes more time and the time required for imaging processing becomes longer. If the imaging processing takes a lot of time, for example, the display of the thinned-out display image is delayed, that deteriorates the operability.

The present invention is achieved in light of the above-described situation, and is intended to enable rapid imaging processing.

According to the present invention, there is provided an imaging apparatus. This imaging apparatus includes a first reading-out unit that reads out pixels necessary for composing a thinned-out display image from an imaging element, a generating unit that generates the thinned-out display image from the pixels read out from the first reading-out unit, a second reading-out unit that reads out, in one or more read-outs, pixels which are not read out by the first reading-out unit, and a recording unit that records the image composed of the pixels read out by the first reading-out unit and the second reading-out unit.

The imaging apparatus can further include a detecting unit that detects all or a portion of the thinned-out display image, and an image processing unit that applies image processing to the image read out by the first reading-out unit and the second reading-out unit, based on a detection result by the detecting unit, and the recording unit can record the image resulting from applying the image processing by the image processing unit.

According to the present invention, there is provided an imaging method. This imaging method includes a first reading-out step of reading out pixels necessary for composing a thinned-out display image from an imaging element, a generating step of generating the thinned-out display image from the pixels read out in the processing of the first reading-out step, a second reading-out step of reading out, in one or more read-outs, pixels which are not read out in the processing of the first reading-out step, and a recording step of recording the image composed of the pixels read out in the processing of the first reading-out step and the second reading-out step.

According to the present invention, there is provided a program. This program is characterized by making a computer execute process including a first reading-out step of reading out pixels necessary for composing a thinned-out display image from an imaging element, a generating step of generating the thinned-out display image from the pixels read out in the processing of the first reading-out step, a second reading-out step of reading out, in one or more read-outs, pixels which are not read out in the processing of the first reading-out step, and a recording step of recording the image composed of the pixels read out in the processing of the first reading-out step and the second reading-out step.

In the imaging apparatus and method, and program of the present invention, the pixels necessary for composing the thinned-out display image are read out from the imaging element, the thinned-out display image is generated from the read-out pixels, the pixels which are not read out are read out in one or more read-outs, and the image read out is finally recorded.

According to the present invention, the imaging processing can be performed rapidly.

### Brief Description of Drawings

Fig. 1 is a diagram showing a configuration example of an imaging element of a CCD.
Fig. 2 is a diagram showing a configuration example of vertical registers.
Figs. 3A to 3C are diagrams for explaining a method for reading out an image in a conventional electronic camera.

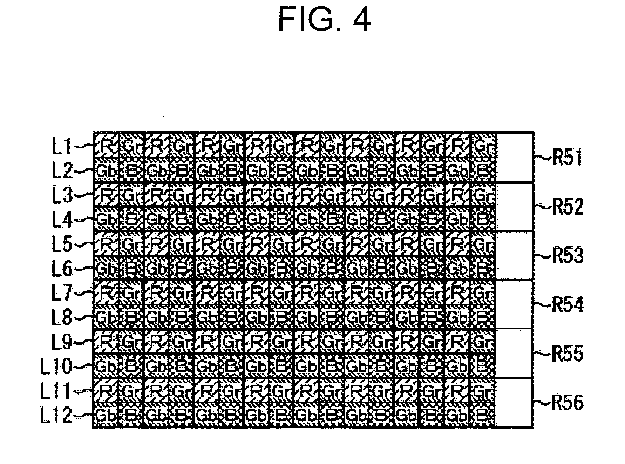

Fig. 4 is a diagram showing another configuration example of vertical registers.

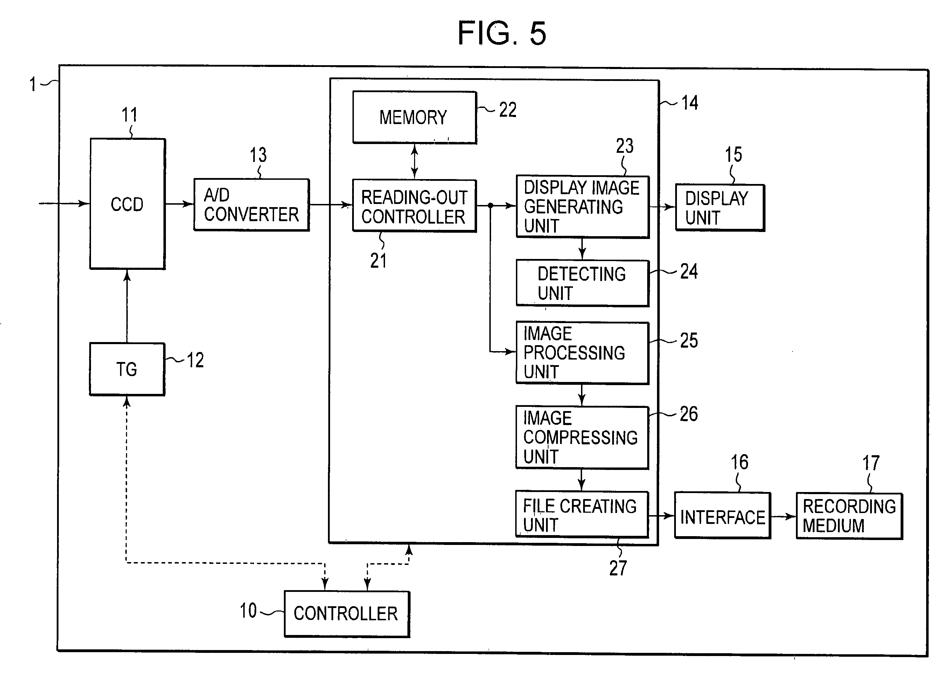

Fig. 5 is a block diagram showing a configuration example of an electronic camera to which the present invention is applied.

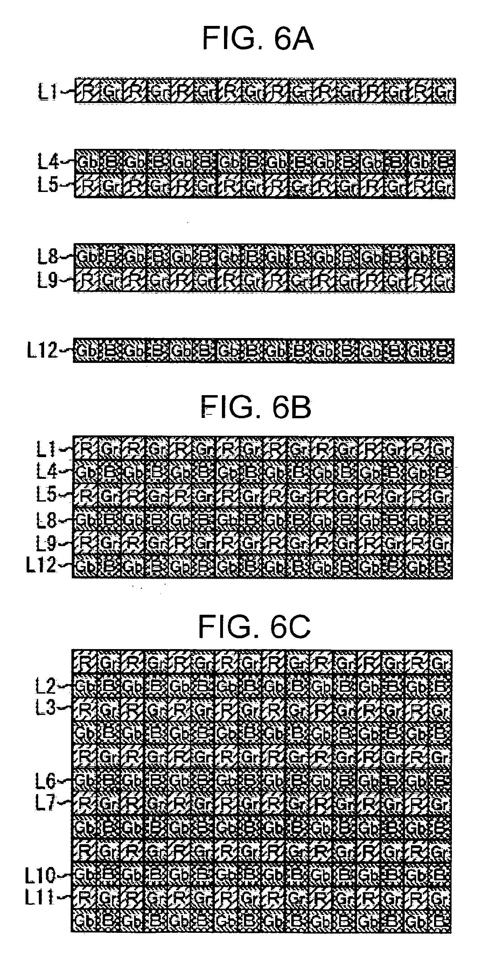

Figs. 6A to 6C are diagrams for explaining a method for reading out an image in the electronic camera of Fig. 5.

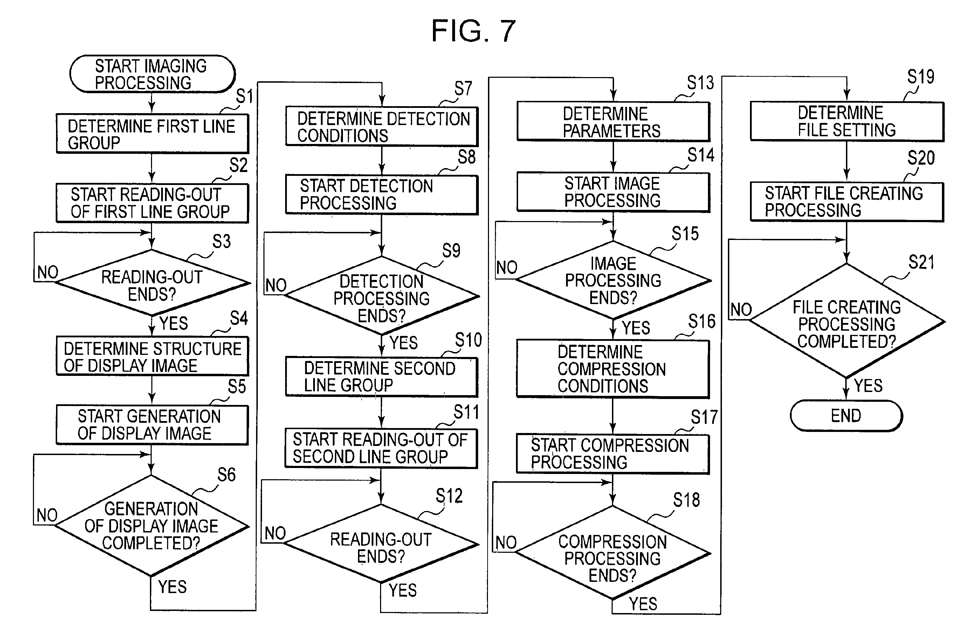

Fig. 7 is a flowchart for explaining imaging processing of the electronic camera of Fig. 5.

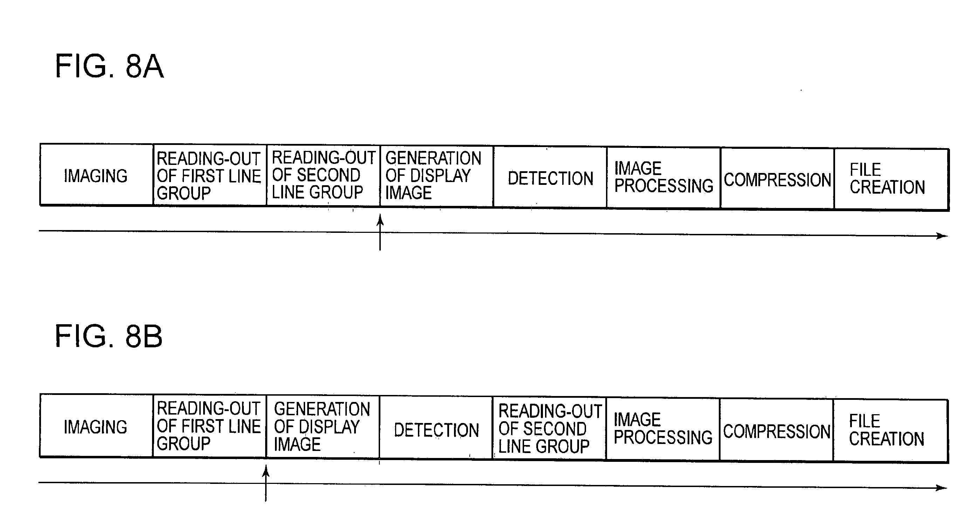

Fig. 8 is a diagram showing timing of respective processing in the imaging processing of Fig. 7.

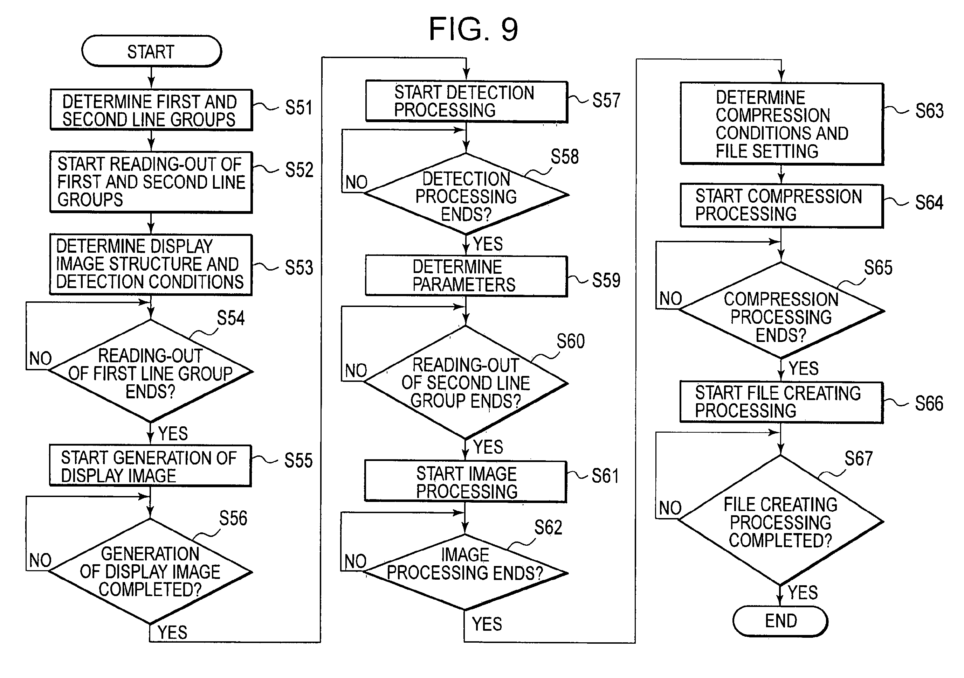

Fig. 9 is a flowchart for explaining another imaging processing of the electronic camera of Fig. 5.

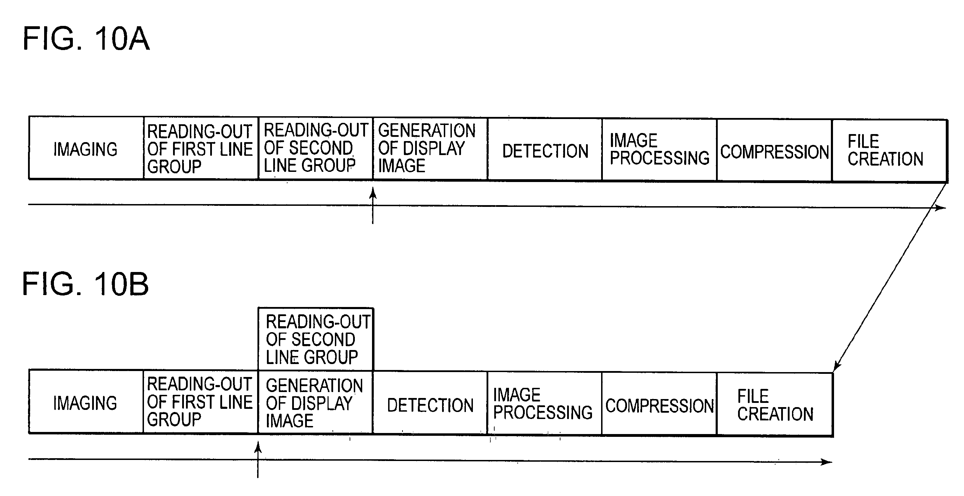

Figs. 10A to 10B are diagrams showing timing of respective processing in the imaging processing of Fig. 9.

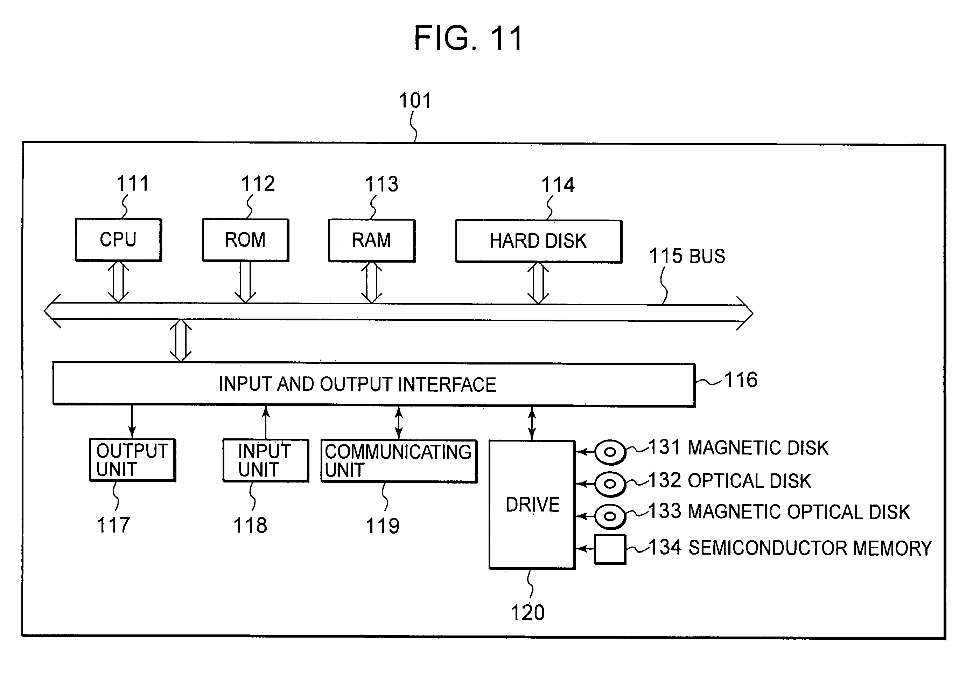

Fig. 11 is a diagram showing a configuration example of a personal computer.

### Best Mode for Carrying out the Invention

Fig. 5 shows a configuration example of an electronic camera 1 to which the present invention is applied. When a shutter not shown in the figure is operated (released), this electronic camera 1 starts imaging and records a resultant image on a recording medium 17. At this time, the electric camera 1 displays a thinned-out image (thinned-out display image) of the image on a display unit 15. By referring to the thinned-out display image, a user can check the imaging result. Also, the electronic camera 1 detects the thinned-out display image, and processes the image in accordance with resultant color and brightness information.

A CCD 11 photoelectrically converts the image resulting from the imaging (an image formed on a lens), which is inputted from the lens not shown in the figure. Charge resulting from the photoelectric conversion by the CCD 11 (an image signal of the image) is read out in one or more read-outs (in this case, twice) in accordance with a transfer pulse from a timing generator 12, and is read out in a signal processing unit 14 via an A/D converter 13.

More specifically, an image (Fig. 6C) is read out in such a manner that portions necessary for composing a thinned-out display image (Fig. 6B) (hereinafter, referred to as a first line group) are first read out as shown in Fig. 6A, and then, the other portions (hereinafter, referred to as a second line group) (Fig. 6C) are read out. Namely, according to the present invention, since the portions necessary for composing a thinned-out display image are first read out, it becomes possible to generate the thinned-out display image (Fig. 6B) without waiting for all the image of one frame (Fig. 6C) to be read out.

The CCD 11, as shown in Fig. 4, is configured so that one vertical register R is shared by two lines vertically adjacent to each other. The respective lines of the first line group and the second line group correspond to the different registers R, respectively, as shown in Fig. 4, and thus, can be read out in each of the line groups.

Pixels of a line L1 of the first line group are read out via a vertical register R51, pixels of a line L4 via a vertical register R52, pixels of a line L5 via a vertical register R53, pixels of a line L8 via a vertical register R54, pixels of a line L9 via a vertical register R55, and pixels of a line L12 via a vertical register R56, at the same timing, respectively.

Moreover, pixels of a line L2 of the second line group are read out via the vertical register R51, pixels of a line L3 via the vertical register 52, pixels of a line L6 via the vertical register R53, pixels of line L7 via the vertical register R54, pixels of line L10 via the vertical register R55, and pixels of line L11 via the vertical register R56, at the same timing, respectively.

Referring back to Fig. 5, the A/D converter 13 converts an image signal (analog signal) from the CCD 11 into a digital image signal to output to the signal processing unit 14.

The signal processing unit 14 reads out the lines necessary for composing the thinned-out display image (Fig. 6A) (the first line group) from the CCD 11 in accordance with an instruction from a controller 10 when the shutter is released, and pastes it to memory (memory 22), and at the same time, generates the thinned-out display image (Fig. 6B) from the lines. The signal processing unit 14 makes the display unit 15 display the generated thinned-out display image.

The signal processing unit 14 also detects the generated thinned-out display image, and determines parameters (a gain amount and the like) in accordance with resultant color and brightness information and the like.

After reading out the first line group, the signal processing unit 14 reads out the remaining line (the second ling group) from the CCD 11, and further paste it to the memory 22. This allows the entire image (Fig. 6C) to be read out. The signal processing unit 14 applies the imaging processing in accordance with the parameters determined previously to the read-out image, and then, after applying compression and the like, records the image on the recording medium 17 via an interface 16.

The controller 10 controls the respective units.

Next, a configuration of the signal processing unit 14 is described.

A reading-out controller 21 of the signal processing unit 14 reads out the first line group from the CCD 11 via.the A/C converter 13 at predetermined timing in accordance with the control of the controller 10, and records it on (paste to) the memory 22 (Fig. 6A). The reading-out controller 21 also reads out the second line group from the CCD 11 via the A/D-converter 13 at different timing in accordance with the control of the controller 10, and pastes it together with the first line group previously pasted to the memory 22 (Fig. 6C). The reading-out controller 21 supplies the image read out in this manner to an image processing unit 25.

A thinned-out display image generating unit 23 reads out the first line group recorded on the memory 22 via the reading-out controller 21, and utilizes it to generate the thinned-out display image. The thinned-out display image generating unit 23 supplies the generated thinned-out display image to a detecting unit 24, and at the same time, supplied it to the display unit 15.

The detecting unit 24 detects the thinned-out display image supplied from the thinned-out display image generating unit 23 and supplies resultant color and brightness information and the like to the controller 10.

The image processing unit 25 applies the image processing to the image supplied from the reading-out controller 21, based on the parameters in accordance with the detection result in the detecting unit 24, which is notified from the controller 10, and supplies the resultant image to an image compressing unit 26.

The image compressing unit 26 compresses the image supplied from the image processing unit 25 to supply a file creating unit 27.

The file creating unit 27 creates a file, in which the compressed image supplied from the image compressing unit 26 is stored, on the recording medium 17 via the interface 16 (records the compressed image).

Next, the imaging processing is described with reference to a flowchart of Fig. 7.

When the shutter not shown in the figure is released, in step S1, the controller 10 of the electronic camera 1 determines the pixels to be first read out from the CCD 11 (first line group), and in step S2, controls the timing generator 12 so as to start output of a transfer pulse, and at the same time, controls the reading-out controller 21 of the signal processing unit 14 to start the reading-out of the first line group. This allows the timing generator 12 to start the output of the transfer pulse, and the reading-out controller 21 to start the reading-out of the first line group (Fig. 6A) from the CCD 11 and the recording on the memory 22.

In step S3, the controller 10 stands by until the reading-out of the first line group by the reading-out controller 21 of the signal processing unit 14 is completed, and when it is completed (when the first line group is pasted to the memory 22, as shown in Fig. 6A), the processing goes to step S4 to determine a structure of the thinned-out display image (size of the thinned-out display image and the like).

When the reading-out of the first line group from the CCD 11 is completed,, the timing generator 12 stops the output of the transfer pulse.

In step S5, the controller 10 controls the thinned-out display image generating unit 23 to start the generation of the thinned-out display image in accordance with the structure determined in step S4. This allows the thinned-out display image generating unit 23 to start acquiring from the memory 22 the pixels necessary for generating the thinned-out display image corresponding to the structure notified from the controller 10, thereby starting the generation of the thinned-out display image. For example, when the structure of the thinned-out display image determined in step S4 requires all the first line group, all of that is read out, while when a portion thereof is required, only the portion is read out.

In step S6, the controller 10 stands by until the generation of the thinned-out display image in the thinned-out display image generating unit 23 of the signal processing unit 14 is completed, and when it is completed, the processing goes to step S7 to determine detection conditions (a range of the thinned-out display image to be detected and the like).

The thinned-out display image generating unit 23, when generating the thinned-out display image, supplies the generated thinned-out display image to the display unit 15 to display, and at the same time, supplies it to the detecting unit 24.

In step S8, the controller 10 controls the detecting unit 24 to start the detection of the thinned-out display image based on the detection conditions determined in step S7. The detecting unit 24 starts the detection of the thinned-out display image supplied from the thinned-out display image generating unit 23, based on the conditions specified by the controller 10.

In step S9, the controller 10 stands by until the detection processing by the detecting unit 24 is completed, and when it is completed and color and brightness information of the thinned-out display image is acquired, the processing goes to step S10 to determine pixels to be read out next (the second line group).

The detecting unit 24, when completing the detection processing, supplies the detection result (color and brightness information and the like) to the controller unit 10.

In step S11, the controller 10 controls the timing generator 12 to start the output of the transfer pulse, and at the same time, controls the reading-out controller 21 of the signal processing unit 14 to start the reading-out of the second line group. The timing generator 12 starts the output of the transfer pulse, and the reading-out controller 21 starts the reading-out of the second line group from the CCD 11 and its storage into the memory 22.

In step S12, the controller 10 stands by until the reading-out of the second line group is completed, and when it is completed (when the second line group is also pasted to the memory 22, as shown in Fig. 6C and the entire image is read out), the processing goes to step S13 to determine various parameters (a gain amount and the like) on the image processing based on the detection information acquired in step S9.

When the reading-out of the second line group from the CCD 11 is completed, the timing generator 12 stops the output of the transfer pulse, and the reading-out controller 21 supplies the image stored in the memory 22 (Fig. 6C) to the image processing unit 25.

In step S14, the controller 10 controls the image processing unit 25 to start the image processing in accordance with the parameters determined in step S13. The image processing unit 25 starts the image processing in accordance with the parameters determined in step S13 with respect to the image supplied from the reading-out controller 21.

In step S15, the controller 10 stands by until the image processing by the image processing unit 25 of the signal processing unit 14 ends, and when the image processing ends, the processing goes to step S16 to determine conditions (a range of the image to be compressed, a compression ratio and the like) for compressing the image subjected to the image processing.

The image processing unit 25, when completing the image processing, supplies the image resulting from the image processing to the image compressing unit 26.

In step S17, the controller 10 controls the image compressing unit 26 to start the compression processing based on the conditions determined in step S16. The image compressing unit 26 starts the compression processing based on the conditions determined in step S16 with respect to the image supplied from the image processing unit 25.

In step S18, the controller 10 stands by until the compression processing in the image compressing unit 26 ends, and when the compression processing ends, the processing goes to step S19 to determine setting (a file name, header information and the like) of the file in which the compressed image is stored.

The image compressing unit 26, when completing the compression processing, supplies the compressed image resulting from the compression to the file creating unit 27.

In step S20, the controller 10 controls the file creating unit 27 to start the creation of the file in accordance with the setting determined in step S 19. The file creating unit 27 starts the creation of the file in which the image supplied from the image compressing unit 26 is stored, corresponding to the setting determined in step S19.

In step S21, the controller 10 stands by until the file creation in the file creating unit 27 is completed, and when the file creation is completed (when the image is recorded), the processing is completed.

A of Fig. 8 shows the timing of the respective processing in the imaging processing of a conventional electronic camera. B of Fig. 8 shows the timing of the respective processing in the imaging processing of the above-described electronic camera 1 to which the present invention is applied. In the conventional electronic camera, after the reading-out of the second line group (even-numbered lines) (after all the image is read out) (Fig. 3B), the generation of the thinned-out display image is started (started at the timing indicated by upward arrow in A of Fig. 8). In contrast, in the electronic camera 1 to which the present invention is applied, after the reading-out of the first line group (Fig. 6A), the generation of the thinned-out display image is started (started at the timing indicated by upward arrow of B of Fig. 8), so that the generation, display and detection processing of the thinned-out display image can be performed early.

While in the example of Fig. 6, the number of lines in each of the first line group and the second line group is the same, the first line group includes lines necessary for generating the thinned-out display image, and actually the first line group can include fewer lines than the other line group (second line group). Namely, as compared with the conventional case where the first line group and the second line group are composed by evenly dividing, the first line group can be more rapidly read out, by which the generation of the thinned-out display image and the like can be started earlier.

Moreover, the lines composing the thinned-out display image are further reduced in number (the image is made more grainy) to reduce the number of lines of the first line group and shorten a reading-out time of the first line group, which allows the processing such as the generation of the thinned-out display image to be more rapidly performed.

While in the foregoing, the case where the image is read out in twice read-outs has been described, the present invention can be applied to a case where the image is read out in more than twice read-outs.

Next, another imaging processing is described with reference to a flowchart of Fig. 9.

When the shutter not shown in the figure is released, in step S51, the controller 10 determines the first line group and the second line group, and in step S52, controls the timing generator 12 to start the output of the transfer pulse, and at the same time, controls the reading-out controller 21 of the signal processing unit 14 to start the first line group and the second line group.

This allows the timing generator 12 to start the output of the transfer pulse. The reading-out controller 21 starts the reading-out of the first line group (Fig. 6A) from the CCD 11 and its storage into the memory 22. After finishing the reading-out of the first line group and the storage into the memory 22, the reading-out controller 21 continuously starts the reading-out of the second line group and the storage into the memory 22.

In step S53, the controller 10 determines a structure of the thinned-out display image (size of the thinned-out display image and the like) and detection conditions (a range of detection and the like).

In step S54, the controller 10 stands by until the reading-out of the first line group by the reading-out controller 21 of the signal processing unit 14 is completed, and when it is completed (when the first line group is pasted to the memory 22, as shown in Fig. 6A), the processing goes to step S55, in which the controller 10 controls the thinned-out display image generating unit 23 to start the generation of the thinned-out display image in accordance with the structure determined in step S53. The thinned-out display image generating unit 23 starts the acquisition from the memory 22 of the lines necessary for composing the thinned-display image, which is notified by the controller 10, to start the generation of the thinned-out display image.

In step S56, the controller 10 stands by until the generation of the thinned-out display image in the thinned-out display image generating unit 23 of the signal processing unit 14 is completed, and when it is completed, the processing goes to step S57, in which the controller 10 controls the detecting unit 24 to start the detection of the thinned-out display image based on the detection conditions determined in step S53. The detecting unit 24 starts the detection of the thinned-out display image supplied from the thinned-out display image generating unit 23, based on the conditions specified by the controller 10.

In step S58, the controller 10 stands by until the detection processing by the detecting unit 24 is completed, and when it is completed and color and brightness information of the thinned-out display image is acquired, the processing goes to step S59 to determine various parameters (a gain amount and the like) on the image processing based on the detection information acquired in step S58.

In step S60, the controller 10 stands by until the reading-out of the second line group is completed, and when itis completed, the processing goes to step S61, in which the controller 10 controls the image processing unit 25 to start the image processing in accordance with the parameters determined in step S59. The image processing unit 25 starts the image processing in accordance with the parameters determined in step S59 with respect to the image supplied from the reading-out controller 21.

In step S62, the controller 10 stands by until the image processing by the image processing unit 25 is completed, and when the image processing is completed, the processing goes to step S63 to determine conditions (a range of an image to be compressed and a compression ratio and the like) for compressing the image subjected to the image processing and setting of a file (a file name, header information and the like).

In step S64, the controller 10 controls the image compressing unit 26 to start the compression processing based on the conditions determined in step S63. The image compressing unit 26 starts the compression processing based on the conditions determined in step S63 with respect to the image supplied from the image processing unit 25.

In step S65, the controller 10 stands by until the compression processing in the image compressing unit 26 ends, and when the compression processing is completed, the processing goes to step S66, in which the controller 10 controls the file creating unit 27 to start the creation of the file in accordance with the setting determined in step S63. The file creating unit 27 starts the creation of the file in which the image supplied from the image compressing unit 26 is stored, corresponding to the determined setting.

In step S67, the controller 10 stands by until the file creation in the file creating unit 27 is completed, and when the file creation is completed (when the image is stored), the processing is completed.

Fig. 10A, similar to A of Fig. 8, shows the timing of the respective processing in the imaging processing of the conventional electronic camera. B of Fig. 10 shows the timing of the respective processing in the imaging processing of the above-described electronic camera 1 to which the present invention is applied.

In the conventional electronic camera, after the reading-out of the second line group (even-numbered lines) (after all the image is read out), the generation of the thinned-out display image is started (started at the timing indicated by upward arrow in Fig. 10A). In contrast, in the case of the above-described imaging processing, after the reading-out of the first line group, the generation of the thinned-out display image and the reading-out of the second line group are simultaneously performed (started at the timing corresponding to upward arrow of B of Fig. 10), so that the generation and display of the thinned-out display image can be performed early, and the image processing for the image can also be started early, which can shorten a time of the entire image processing.

While the above-described series of processing can be realized by hardware, it can be also realized by software. In the case where the series of processing is realized by software, a program constituting the software is installed in a computer, and the program is executed in the computer to thereby functionally realize the above-described electronic camera 1.

Fig. 11 shows a configuration example of a computer 101. An input and output interface 116 is connected to a Central Processing Unit (CPU) 111 via a bus 115, and when an instruction is inputted by a user from an input unit 118 composed of a key board, mouse and the like via the input and output interface 116, a program stored in Read Only Memory (ROM) 112, a hard disk 114, or a recording medium such as a magnetic disk 131, an optical disk 132, a magnetic optical disk 133 or a semiconductor memory 134, which is mounted on a drive 120, is loaded on Random Access Memory (RAM) 113 to be executed. This allows the above-described various types of processing to be performed. Furthermore, the CPU 111 outputs the processing result on a display unit 117 composed of a Liquid Crystal Display (LCD) and the like via the input and output interface 116, for example, as necessary. The program can be stored in the hard disk 114 or the ROM 112 in advance and can be provided to the user integrally with the computer 101, can be provided as a package medium such as the magnetic disk 131, optical disk 132, magnetic optical disk 133 and semiconductor memory 132, or can be provided to the hard disk 114 via a communicating unit 119 from a satellite, network or the like.

In the present specification, the steps describing the program provided by the recording medium include not only processing performed chronologically in the described order but the processing performed in parallel or individually instead of being processed chronologically.

## Claims

1. An imaging apparatus for reading out an image resulting from imaging from an imaging element in a plurality of read-outs, **characterized by** comprising:
a first reading-out unit configured to read out pixels necessary for composing a thinned-out display image from said imaging element;
a generating unit configured to generate said thinned-out display image from said pixels read out from said first reading-out unit;
a second reading-out unit configured to read out, in one or more read-outs, pixels which are not read out by said first reading-out unit ; and
a recording unit configured to record said image composed of the pixels read out by said first reading-out unit and second reading-out unit.

2. The imaging apparatus according to claim 1, **characterized by** further comprising:
a detecting unit configured to detect all or a portion of said thinned-out display image; and
an image processing unit configured to apply image processing to said image read out by said first reading-out unit and second reading-out unit, based on a detection result by said detecting unit,
wherein said recording unit records the image processed by said image processing unit.

3. An imaging method for reading out an image resulting from imaging from an imaging element in a plurality of read-outs, **characterized by** comprising:
a first reading-out step of reading out pixels necessary for composing a thinned-out display image from said imaging element;
a generating step of generating said thinned-out display image from said pixels read out in the processing of said first reading-out step;
a second reading-out step of reading out, in one or more read-outs, pixels which are not read out in the processing of said first reading-out step ; and
a recording step of recording said image composed of the pixels read out in the processing of said first reading-out step and second reading-out step.

4. A program for causing a computer to execute processes for imaging in which an image resulting from imaging is read out from an imaging element in a plurality of read-outs, **characterized by** comprising:
a first reading-out step of reading out pixels necessary for composing a thinned-out display image from said imaging element;
a generating step of generating said thinned-out display image from said pixels read out in the processing of said first reading-out step;
a second reading-out step of reading out, in one or more read-outs, pixels which are not read out in the processing of said first reading-out step ; and
a recording step of recording said image composed of the pixels read out in the processing of said first reading-out step and second reading-out step.
